# EUROPEAN PATENT SPECIFICATION

(11) **EP 4 215 581 B1**
(45) Date of publication and mention of the grant of the patent: **14.10.2026**
(21) Application number: 21936090.6
(22) Date of filing: 02.11.2021
(51) Int. Cl.: C08L 23/08, C08K 3/22, C08K 3/38, C08K 9/06, C09K 5/14, C08K 7/00, C10M 113/16, C10M 169/02, C10M 169/06, C10M 171/06, C10N 20/02, C10N 30/02, C10N 30/00, C10N 50/00, C10N 20/00, C10N 50/10, C10N 20/06

(54) **THERMALLY CONDUCTIVE GREASE COMPOSITION**
WÄRMELEITFÄHIGE SCHMIERFETTZUSAMMENSETZUNG
COMPOSITION DE GRAISSE THERMOCONDUCTRICE

(30) Priority: 08.04.2021 JP 2021065981
(43) Date of publication of application: 26.07.2023
(73) Proprietor: Fuji Polymer Industries Co., Ltd., Nagoya-shi, Aichi 4500002 (JP)
(72) Inventor: KATAISHI, Takumi, Moriyama-ku, Nagoya-shi Aichi 463-0026 (JP)
(74) Representative: Dehns
(86) International application number: PCT/JP2021/040400
(87) International publication number: WO 2022/215292

(56) References cited:
- JP-A- 2002 305 271
- JP-A- 2002 329 989
- JP-A- 2006 188 638
- JP-A- 2010 077 220
- JP-A- 2017 530 220

## Description

### Technical Field

The present invention relates to a thermally conductive grease composition that is suitable to be interposed between a heat generating member and a heat dissipating material of electrical and electronic components or the like.

### Background Art

With the significant improvement in the performance of semiconductor devices such as CPUs in recent years, the amount of heat generated by them has become extremely large. For this reason, heat dissipating materials are attached to electronic components that may generate heat, and a thermally conductive grease is used to improve the adhesion between the heat dissipating materials and heat generating members such as semiconductor devices. The thermally conductive grease has been required to have high thermal conductive properties and drop resistance as devices become smaller in size, more sophisticated, and more highly integrated. Patent Document 1 proposes a composition that includes a thermally conductive filler, a polyorganosiloxane resin containing at least one polysiloxane having one curable functional group in the molecule, and a siloxane compound having an alkoxysilyl group and a linear siloxane structure. Patent Document 2 proposes a thermally conductive silicone composition that includes a liquid silicone, a thermally conductive filler, and hydrophobic spherical silica fine particles, and that has high heat dissipation properties. Patent Document 3 proposes a fluorine-containing adhesive composition that includes alumina with different particle sizes and shapes (see paragraph [0131]).

JP 2006-188638 A discloses a thermally conductive grease containing a base oil and a thermally conductive filler.

### Prior Art Documents

### Patent Documents

Patent Document 1: JP 2018-104714 A
Patent Document 2: JP 2016-044213 A
Patent Document 3: JP 2017-190389 A

### Disclosure of Invention

### Problem to be Solved by the Invention

However, the conventional thermally conductive silicone grease may cause an electrical contact failure due to the generation of low molecular siloxane. Moreover, the conventional thermally conductive silicone grease has low drop resistance and a high specific gravity.

To solve the above conventional problems, the present invention provides a thermally conductive grease composition that is less likely to generate low molecular siloxane and has high drop resistance and a low specific gravity.

### Means for Solving Problem

A thermally conductive grease composition of the present invention is a non-curable thermally conductive grease composition and includes: A. 100 parts by mass of an ethylene-α-olefin copolymer with a kinematic viscosity of 10000 mm²/s or less at 40°C; and B. 115 to 580 parts by mass of thermally conductive particles with respect to 100 parts by mass of the component A. The thermally conductive particles contain the following: B1. 55 to 350 parts by mass of irregularly-shaped alumina with a median particle size of 0.1 to 1 µm, in which a part or all of the alumina is surface treated with an alkoxysilane compound expressed by RₐSi(OR')₄₋ₐ (where R represents a substituted or unsubstituted organic group having 8 to 12 carbon atoms, R' represents an alkyl group having 1 to 4 carbon atoms, and a represents 0 or 1) or a partial hydrolysate of the alkoxysilane compound; B2. 5 to 60 parts by mass of plate-shaped boron nitride with a median particle size of 0.1 to 10 µm; and B3. 55 to 170 parts by mass of aggregated boron nitride with a median particle size of 20 to 70 µm. A mass ratio (B3/B2) of the component B3 to the component B2 is 2 to 20.

### Effects of the Invention

The thermally conductive grease composition of the present invention includes the ethylene-α-olefin copolymer as a matrix resin, and thus is less likely to generate low molecular siloxane. Moreover, since the irregularly-shaped alumina, the plate-shaped boron nitride, and the aggregated boron nitride, each of which has a specific particle size, are combined and mixed together, the thermally conductive grease composition has high drop resistance and a low specific gravity.

### Brief Description of Drawings

[FIG. 1] FIGS. 1A to 1B are diagrams illustrating a method for measuring a thermal conductivity of a sample in an example of the present invention.
[FIG. 2] FIGS. 2A to 2D are schematic diagrams illustrating a drop test used in an example of the present invention.

### Description of the Invention

The thermally conductive grease composition of the present invention is a non-curable thermally conductive grease composition. Therefore, a curing catalyst and a curing agent are not necessary, but may be added in some cases. The ethylene-α-olefin copolymer with a kinematic viscosity of 10000 mm²/s or less at 40°C serves as a matrix resin. The use of the ethylene-α-olefin copolymer as a base polymer can reduce the generation of low molecular siloxane in the thermally conductive grease composition of the present invention. The kinematic viscosity of the ethylene-α-olefin copolymer is preferably 50 to 10000 mm²/s, and more preferably 100 to 8000 mm²/s at 40°C. The ethylene-α-olefin copolymer may be, e.g., an ethylene-propylene copolymer. The ethylene-propylene copolymer is a hydrocarbon-based synthetic oil that does not contain a polar group, and is commercially available as the "LUCANT (trade name)" series manufactured by Mitsui Chemicals, Inc. The ethylene-propylene copolymer has a specific gravity of 0.83 to 0.85 (a density of 0.83 to 0.85 g/cm³), which is advantageous in reducing the specific gravity of the composition.

The component A and the component B, and optionally other components, are mixed in the following proportions to form a grease.
A. 100 parts by mass of the ethylene-α-olefin copolymer with a kinematic viscosity of 10000 mm²/s or less at 40°C
B. 115 to 580 parts by mass of the thermally conductive particles with respect to 100 parts by mass of the component A. The amount of the component B is preferably 130 to 550 parts by mass, and more preferably 160 to 500 parts by mass.

The thermally conductive particles contain the following:
B1. 55 to 350 parts by mass of irregularly-shaped alumina with a median particle size of 0.1 to 1 µm, in which a part or all of the alumina is surface treated with an alkoxysilane compound expressed by RₐSi(OR')₄₋ₐ (where R represents a substituted or unsubstituted organic group having 8 to 12 carbon atoms, R' represents an alkyl group having 1 to 4 carbon atoms, and a represents 0 or 1) or a partial hydrolysate of the alkoxysilane compound;
B2. 5 to 60 parts by mass of plate-shaped boron nitride with a median particle size of 0.1 to 10 µm; and
B3. 55 to 170 parts by mass of aggregated boron nitride with a median particle size of 20 to 70 pm. The mixing ratio (B3/B2) of the component B3 to the component B2 is 2 to 20.

In this case, the term "part" of the alumina means 50% by mass or more.

The thermally conductive grease composition preferably further includes 0.1 to 2 parts by mass of an alkoxysilane compound expressed by RₐSi(OR')₄₋ₐ (where R represents a substituted or unsubstituted organic group having 8 to 12 carbon atoms, R' represents an alkyl group having 1 to 4 carbon atoms, and a represents 0 or 1) as a component C (viscosity modifier). This can reduce the viscosity of the composition.

The thermal conductivity of the thermally conductive grease composition is preferably 2.0 W/m·K or more and 8.0 W/m·K or less, more preferably 2.5 to 8.0 W/m·K, and further preferably 3.0 to 8.0 W/m·K This thermally conductive grease composition is suitable as a TIM (thermal interface material).

The specific gravity of the thermally conductive grease composition is preferably 1.0 or more and 2.4 or less, more preferably 1.1 to 2.3, and further preferably 1.2 to 2.2. The thermally conductive grease composition with such a low specific gravity can help to reduce the weight of the overall electronic components.

The absolute viscosity of the thermally conductive grease composition is preferably 1000 to 20000 Pas, more preferably 1000 to 18000 Pas, and further preferably 1000 to 15000 Pas at 23°C, which is measured with a B-type viscometer using a T-E spindle at a rotational speed of 5 rpm. This can improve the workability of the thermally conductive grease composition, and can also facilitate the insertion or application of the thermally conductive grease composition between the heat generating member and the heat dissipating material

In the present invention, the reason that the components B1, B2, and B3 are mixed with the component A in the above proportions is to allow small-size particles to fill the space between large-size particles so that closest packing can be approximated to enhance the thermal conductive properties. The particle size may be measured with a laser diffraction scattering method to determine D50 (median diameter) in a volume-based cumulative particle size distribution. The method may use, e.g., a laser diffraction/scattering particle size distribution analyzer LA-950 S2 manufactured by HORIBA, Ltd.

A part or all of the irregularly-shaped alumina with a median particle size of 0.1 to 1 µm is surface treated with an alkoxysilane compound expressed by RₐSi(OR')₄₋ₐ (where R represents a substituted or unsubstituted organic group having 8 to 12 carbon atoms, R' represents an alkyl group having 1 to 4 carbon atoms, and a represents 0 or 1) or a partial hydrolysate of the alkoxysilane compound. Examples of the alkoxysilane compound include octyltrimethoxysilane, octyltriethoxysilane, decyltrimethoxysilane, decyltriethoxysilane, dodecyltrimethoxysilane, and dodecyltriethoxysilane. These silane compounds may be used alone or in combination of two or more. The alkoxysilane and one-end silanol siloxane may be used together as a surface treatment agent. In this case, the surface treatment may include adsorption in addition to a covalent bond. The surface treatment improves the mixability of the thermally conductive particles with the matrix resin.

The thermally conductive particles are preferably pretreated with the alkoxysilane compound. It is preferable that 0.01 to 10 parts by mass of the alkoxysilane compound is added to 100 parts by mass of the thermally conductive particles. The surface treatment facilitates the filling of the thermally conductive particles into the matrix resin.

The irregularly-shaped alumina is produced by pulverization or crushing and may be selected from commercially available products.

The dropping of the thermally conductive grease composition is preferably 5 mm or less, which is determined by a thermal shock test. In the thermal shock test, 0.4 g of the thermally conductive grease composition is sandwiched between two plates and compressed to a thickness of 0.5 mm. Then, the two plates are held upright and placed in a thermal shock tester, where the compressed thermally conductive grease composition is subjected to 100 cycles of thermal shock at - 40°C for 30 minutes and 125°C for 30 minutes. The results confirm that the thermally conductive grease composition can maintain high drop resistance.

The thermally conductive grease composition of the present invention may include components other than the above as needed. For example, a heat resistance improver (such as colcothar, titanium oxide, or cerium oxide), a flame retardant, and a flame retardant auxiliary may be added. Moreover, an organic or inorganic particle pigment may be added for the purpose of coloring and toning. An alkoxy group-containing silicone may be added as a material used for, e.g., the surface treatment of a filler.

The thermally conductive grease composition of the present invention may be present in, e.g., a dispenser, a bottle, a can, or a tube and offered as a commercial product.

### Examples

Hereinafter, the present invention will be described by way of examples. However, the present invention is not limited to the following examples. Various parameters were measured in the following manner.

### <Thermal conductivity>

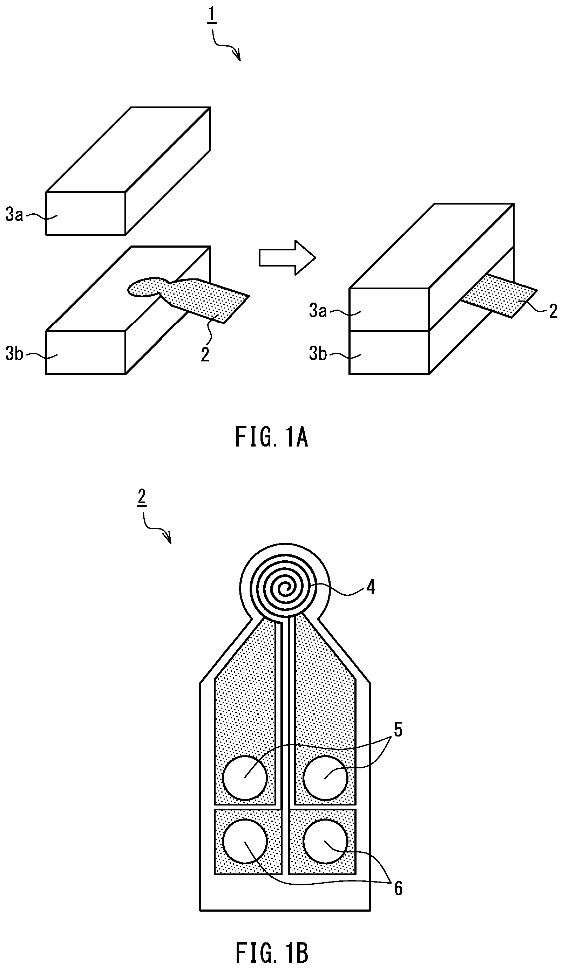

The thermal conductivity of a thermally conductive grease was measured by a hot disk (in accordance with ISO/CD 22007-2). As shown in FIG. 1A, using a thermal conductivity measuring apparatus 1, a polyimide film sensor 2 was sandwiched between two samples 3a, 3b, and constant power was applied to the sensor 2 to generate a certain amount of heat. Then, the thermal characteristics were analyzed from the value of a temperature rise of the sensor 2. The sensor 2 has a tip 4 with a diameter of 7 mm. As shown in FIG. 1B, the tip 4 has a double spiral structure of electrodes. Moreover, an electrode 5 for an applied current and an electrode 6 for a resistance value (temperature measurement electrode) are located on the lower portion of the sensor 2. The thermal conductivity was calculated by the following formula (1). [Formula 1] $λ = \frac{Po ⋅ D \left(τ\right)}{{π}^{3 / 2} ⋅ r} ⋅ \frac{D \left(τ\right)}{Δ T \left(τ\right)}$
- λ:: Thermal conductivity (W/m·K)
- P₀:: Constant power (W)
- r:: Radius of sensor (m)
- τ:: $\sqrt{α ⋅ t / {r}^{2}}$
- α:: Thermal diffusivity of sample (m²/s)
- t:: Measuring time (s)
- D(τ):: Dimensionless function of τ
- ΔT(τ):: Temperature rise of sensor (K)

### <Absolute viscosity of grease>

The absolute viscosity of a thermally conductive grease was measured with a B-type viscometer (Brookfield HB DV2T). The B-type viscometer used a T-E spindle to measure the absolute viscosity at a rotational speed of 5 rpm and 23°C.

### <Drop test>

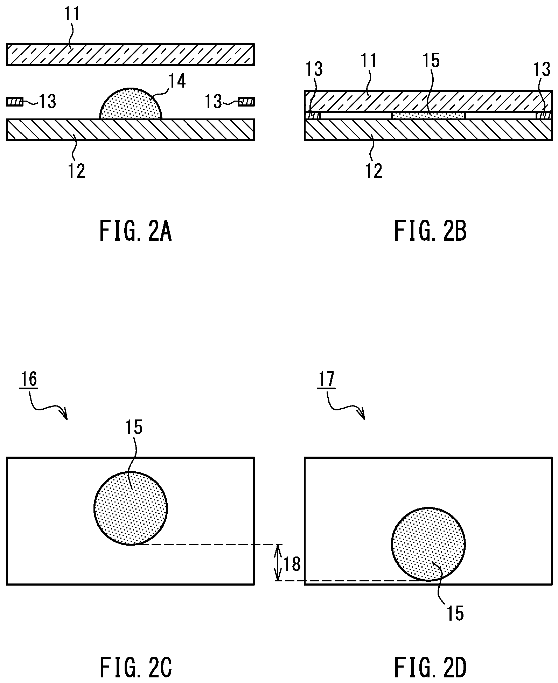

A thermally conductive grease was measured by a drop test as shown in FIGS. 2A to 2D.

First, 0.4 g of a thermally conductive grease 14 was applied between an aluminum plate 12 of 40 mm long, 100 mm wide, and 5 mm thick and a glass plate 11 of 40 mm long, 100 mm wide, and 5 mm thick (FIG. 2A). Then, the thermally conductive grease 14 was compressed to a thickness of 0.5 mm with spacers 13 inserted between the glass plate 11 and the aluminum plate 12 (FIG. 2B). In FIG. 2B, reference numeral 15 represents the compressed thermally conductive grease having a thickness of 0.5 mm. Next, this sample was placed in a thermal cycle tester so that the space between the glass plate 11 and the aluminum plate 12 was held vertically (FIG. 2C). Reference numeral 16 represents a test piece before the drop test. In this state, the compressed thermally conductive grease 15 was subjected to a thermal cycle test at - 40°C for 30 minutes and 125°C for 30 minutes in each cycle. After 100 cycles were completed, the sample was taken out and observed whether the compressed thermally conductive grease 15 dropped down or not. Reference numeral 17 represents the test piece after the drop test (FIG. 2D), and reference numeral 18 represents a dropping distance. The thermally conductive grease was graded A when the dropping distance was 5 mm or less and graded B when the dropping distance was more than 5 mm.

### (Examples 1 to 2 and Comparative Examples 1 to 2)

### 1. Material components

### (1) Component A: ethylene-propylene copolymer

- Ethylene-propylene copolymer with a kinematic viscosity of 400 mm²/s at 40°C, "LUCANT LX004 (trade name)" manufactured by Mitsui Chemicals, Inc.
- Non-curable silicone oil (dimethylpolysiloxane) with a kinematic viscosity of 110 mm²/s at 40°C

These materials were used in the proportions as shown in Table 1.

### (2) Component B: thermally conductive particles

- Irregularly-shaped alumina with a median particle size of 0.3 µm (D50 = 0.3 pm): a material pretreated with octyltrimethoxysilane (in which 2.4 g of octyltrimethoxysilane was adsorbed on 100 g of alumina)
- Plate-shaped boron nitride with a median particle size of 5 µm (D50 = 5 µm) (without surface treatment)
- Aggregated spherical boron nitride with a median particle size of 60 pm (D50 = 60 µm) (without surface treatment)
- Irregularly-shaped alumina with a median particle size of 2.3 µm (D50 = 2.3 pm): a material pretreated with decyltrimethoxysilane (in which 1.1 g of decyltrimethoxysilane was adsorbed on 100 g of alumina)
- Spherical alumina with a median particle size of 20 µm (D50 = 20 µm) (without surface treatment)

Table 1 shows the amount of each type of the thermally conductive particles added.

### (3) Component C: viscosity modifier

- decyltrimethoxysilane

### 2. Mixing method

The component A was mixed with the thermally conductive particles and the viscosity modifier to form a thermally conductive grease composition.

The thermally conductive grease composition thus obtained was evaluated. Table 1 shows the conditions and the results.

**[TABLE 1]**

| Component | | Ex. 1 | Ex. 2 | Comp. Ex. 1 | Comp. Ex. 2 |
|---|---|---|---|---|---|
| A | Ethylene-propylene copolymer, kinematic viscosity: 400 mm²/s (g) | 100 | 100 | - | 100 |
| | Silicone oil, kinematic viscosity: 110 mm²/s (g) | - | - | 100 | - |
| B1 | Irregularly-shaped alumina, D50 =0.3 µm, surface-treated material (g) | 180 | 207 | 180 | 50 |
| B2 | Plate-shaped boron nitride, D50=5 µm (g) | 20 | 23 | 20 | - |
| B3 | Aggregated spherical boron nitride, D50 = 60 µm (g) | 86 | 99 | 86 | - |
| | Irregularly-shaped alumina, D50 = 2.3 µm, surface-treated material (g) | - | - | - | 650 |
| | Spherical alumina, D50= 20 µm (g) | - | - | - | 550 |
| C | Decyltrimethoxysilane (g) | 0.8 | 0.8 | 0.8 | - |
| B3/B2 mass ratio | | 4.3 | 4.3 | 4.3 | - |
| Absolute viscosity (Pas, B-type viscometer) | | 5000 | 12000 | 3500 | 1300 |
| Thermal conductivity (W/m·K), hot disk method | | 3.7 | 5.5 | 5.1 | 2.6 |
| Drop test (thermal shock, 100 h) | | A | A | B | B |
| Specific gravity | | 1.66 | 1.84 | 1.92 | 3.10 |

The results confirmed that the thermally conductive grease compositions of Examples 1 and 2 were both in the form of a grease, were less likely to generate low molecular siloxane, and had high drop resistance and a low specific gravity.

On the other hand, Comparative Example 1 was inferior to Examples 1 and 2 in the generation of low molecular siloxane, the drop resistance, and the specific gravity, since the silicone oil was used as a matrix resin. Moreover, Comparative Example 2 was inferior to Examples 1 and 2 in the drop resistance and the specific gravity, since the components B2 and B3 were not used.

### Industrial Applicability

The thermally conductive grease composition of the present invention is suitable to be interposed between a heat generating member and a heat dissipating material of electrical and electronic components or the like.

### Description of Reference Numerals

- 1: Thermal conductivity measuring apparatus
- 2: Sensor
- 3a, 3b: Sample
- 4: Tip of the sensor
- 5: Electrode for applied current
- 6: Electrode for resistance value (temperature measurement electrode)
- 11: Glass plate
- 12: Aluminum plate
- 13: Spacer
- 14: Thermally conductive grease
- 15: Compressed thermally conductive grease
- 16: Test piece before test
- 17: Test piece after test
- 18: Dropping distance

## Claims

1. A thermally conductive grease composition that is non-curable comprising:
A. 100 parts by mass of an ethylene-α-olefin copolymer with a kinematic viscosity of 10000 mm²/s or less at 40°C; and
B. 115 to 580 parts by mass of thermally conductive particles with respect to 100 parts by mass of the component A,
wherein the thermally conductive particles contain the following:
B1. 55 to 350 parts by mass of irregularly-shaped alumina which is produced by pulverization or crushing and with a median particle size of 0.1 to 1 µm, in which a part or all of the alumina is surface treated with an alkoxysilane compound expressed by RₐSi(OR')₄₋ₐ (where R represents a substituted or unsubstituted organic group having 8 to 12 carbon atoms, R' represents an alkyl group having 1 to 4 carbon atoms, and a represents 0 or 1) or a partial hydrolysate of the alkoxysilane compound;
B2. 5 to 60 parts by mass of plate-shaped boron nitride with a median particle size of 0.1 to 10 µm; and
B3. 55 to 170 parts by mass of aggregated boron nitride with a median particle size of 20 to 70 µm, and
wherein a mass ratio of the component B3 to the component B2 is 2 to 20; wherein the median particle size is the median diameter, D50, in a volume-based cumulative particle size distribution as measured by laser diffraction scattering.

2. The thermally conductive grease composition according to claim 1, further comprising 0.1 to 2 parts by mass of an alkoxysilane compound expressed by RₐSi(OR')₄₋ₐ (where R represents a substituted or unsubstituted organic group having 8 to 12 carbon atoms, R' represents an alkyl group having 1 to 4 carbon atoms, and a represents 0 or 1) as a component C, which is a viscosity modifier.

3. The thermally conductive grease composition according to claim 1 or 2, wherein a thermal conductivity of the thermally conductive grease composition is 2.0 W/m·K or more and 8.0 W/m·K or less as measured by a hot disk method in accordance with ISO/CD 22007-2.

4. The thermally conductive grease composition according to any one of claims 1 to 3, wherein a specific gravity of the ethylene-α-olefin copolymer is 0.83 to 0.85.

5. The thermally conductive grease composition according to any one of claims 1 to 4, wherein a specific gravity of the thermally conductive grease composition is 1.0 or more and 2.4 or less.

6. The thermally conductive grease composition according to any one of claims 1 to 5, wherein an absolute viscosity of the thermally conductive grease composition is 1000 to 20000 Pas, which is measured with a B-type viscometer using a T-E spindle at a rotational speed of 5 rpm and a temperature of 23°C.

7. The thermally conductive grease composition according to any one of claims 1 to 6, wherein dropping of the thermally conductive grease composition is 5 mm or less, which is determined by a thermal shock test in which 0.4 g of the thermally conductive grease composition is sandwiched between two plates and compressed to a thickness of 0.5 mm, the two plates are held upright and placed in a thermal shock tester, where the compressed thermally conductive grease composition is subjected to 100 cycles of thermal shock at - 40°C for 30 minutes and 125°C for 30 minutes.

8. The thermally conductive grease composition according to any one of claims 1 to 7, wherein the ethylene-α-olefin copolymer is an ethylene-propylene copolymer.

9. The thermally conductive grease composition according to any one of claims 1 to 8, wherein the thermally conductive grease composition is present in a dispenser, a bottle, a can, or a tube.

10. Use of the thermally conductive grease composition according to any one of claims 1 to 8 as a thermal interface material to be interposed between a heat generating member and a heat dissipating material of electrical and electronic components.

## Patentansprüche

1. Nicht aushärtbare, wärmeleitfähige Schmierfettzusammensetzung, umfassend:
A. 100 Massenanteile eines Ethylen-α-Olefin-Copolymers mit einer kinematischen Viskosität von 10000 mm²/s oder weniger bei 40 °C; und
B. 115 bis 580 Massenanteile wärmeleitfähige Partikel, bezogen auf 100 Massenanteile der Komponente A,
wobei die wärmeleitfähigen Partikel Folgendes enthalten:
B1,55 bis 350 Massenanteile unregelmäßig geformtes Aluminiumoxid, das durch Pulverisierung oder Zerkleinerung hergestellt wird und eine mittlere Partikelgröße von 0,1 bis 1 µm aufweist, wobei ein Teil oder das gesamte Aluminiumoxid mit einer Alkoxysilanverbindung, ausgedrückt durch RₐSi(OR')₄₋ₐ, (wobei R eine substituierte oder unsubstituierte organische Gruppe mit 8 bis 12 Kohlenstoffatomen darstellt, R' eine Alkylgruppe mit 1 bis 4 Kohlenstoffatomen darstellt und a 0 oder 1 bedeutet) oder einem Teilhydrolysat der Alkoxysilanverbindung oberflächenbehandelt ist,
B2,5 bis 60 Massenanteile plattenförmiges Bornitrid mit einer mittleren Partikelgröße von 0,1 bis 10 µm; und
B3,55 bis 170 Massenanteile aggregiertes Bornitrid mit einer mittleren Partikelgröße von 20 bis 70 µm, und
wobei ein Massenverhältnis der Komponente B3 zur Komponente B2 2 zu 20 beträgt; wobei die mittlere Partikelgröße der Median-Durchmesser D50 in einer volumenbasierten kumulativen Partikelgrößenverteilung ist, gemessen mittels Laserbeugungsstreuung.

2. Wärmeleitfähige Schmierfettzusammensetzung nach Anspruch 1, weiter umfassend 0,1 bis 2 Massenanteile einer Alkoxysilanverbindung, ausgedrückt durch RₐSi(OR')₄₋ₐ (wobei R eine substituierte oder unsubstituierte organische Gruppe mit 8 bis 12 Kohlenstoffatomen darstellt, R' eine Alkylgruppe mit 1 bis 4 Kohlenstoffatomen darstellt und a 0 oder 1 bedeutet), als eine Komponente C, die ein Viskositätsmodifikator ist.

3. Wärmeleitfähige Schmierfettzusammensetzung nach Anspruch 1 oder 2, wobei eine Wärmeleitfähigkeit der wärmeleitfähigen Schmierfettzusammensetzung, gemessen durch ein Heißscheibenverfahren nach ISO/CD 22007-2, 2,0 W/m·K oder mehr und 8,0 W/m·K oder weniger beträgt.

4. Wärmeleitfähige Schmierfettzusammensetzung nach einem der Ansprüche 1 bis 3, wobei ein spezifisches Geweicht des Ethylen-α-Olefin-Copolymers 0,83 bis 0,85 beträgt.

5. Wärmeleitfähige Schmierfettzusammensetzung nach einem der Ansprüche 1 bis 4, wobei ein spezifisches Gewicht der wärmeleitfähigen Schmierfettzusammensetzung 1,0 oder mehr und 2,4 oder weniger beträgt.

6. Wärmeleitfähige Schmierfettzusammensetzung nach einem der Ansprüche 1 bis 5, wobei eine absolute Viskosität der wärmeleitfähigen Schmierfettzusammensetzung 1000 bis 20000 Pas beträgt, gemessen mit einem Viskosimeter vom Typ B unter Verwendung einer T-E-Spindel bei einer Drehzahl von 5 U/min und einer Temperatur von 23 °C.

7. Wärmeleitfähige Schmierfettzusammensetzung nach einem der Ansprüche 1 bis 6, wobei ein Ablaufen der wärmeleitfähigen Schmierfettzusammensetzung 5 mm oder weniger beträgt, bestimmt durch einen Thermoschocktest, bei dem 0,4 g der wärmeleitfähigen Schmierfettzusammensetzung zwischen zwei Platten angeordnet und auf eine Dicke von 0,5 mm komprimiert werden, wobei die beiden Platten aufrecht gehalten und in einen Thermoschockprüfer eingesetzt werden, wobei die komprimierte, wärmeleitfähige Schmierfettzusammensetzung 100 Thermoschockzyklen bei -40 °C für 30 Minuten und 125 °C für 30 Minuten unterzogen wird.

8. Wärmeleitfähige Schmierfettzusammensetzung nach einem der Ansprüche 1 bis 7, wobei das Ethylen-α-Olefin-Copolymer ein Ethylen-Propylen-Copolymer ist.

9. Wärmeleitfähige Schmierfettzusammensetzung nach einem der Ansprüche 1 bis 8, wobei die wärmeleitfähige Schmierfettzusammensetzung in einem Spender, einer Flasche, einer Dose oder einer Tube vorliegt.

10. Verwendung der wärmeleitfähigen Schmierfettzusammensetzung nach einem der Ansprüche 1 bis 8 als Wärmeschnittstellenmaterial, das zwischen einem wärmeerzeugenden Element und einem wärmeableitenden Material von elektrischen und elektronischen Bauteilen angeordnet werden soll.

## Revendications

1. Composition de graisse thermoconductrice qui est non durcissable comprenant :
A. 100 parties en masse d'un copolymère d'éthylène-α-oléfine présentant une viscosité cinématique de 10 000 mm²/s ou moins à 40 °C ; et
B. 115 à 580 parties en masse de particules thermoconductrices par rapport à 100 parties en masse du composant A,
dans laquelle les particules thermoconductrices contiennent les éléments suivants :
B1. 55 à 350 parties en masse d'alumine de forme irrégulière qui est produite par pulvérisation ou concassage et présentant une taille de particule médiane de 0,1 à 1 µm, dans laquelle une partie ou la totalité de l'alumine est traitée en surface avec un composé d'alcoxysilane représenté par RₐSi(OR')₄₋ₐ, (où R représente un groupe organique substitué ou non substitué présentant 8 à 12 atomes de carbone, R' représente un groupe alkyle présentant 1 à 4 atomes de carbone, et a représente 0 ou 1) ou un hydrolysat partiel du composé d'alcoxysilane
B2. 5 à 60 parties en masse de nitrure de bore en forme de plaque présentant une taille de particule médiane de 0,1 à 10 µm ; et
B3. 55 à 170 parties en masse de nitrure de bore agrégé présentant une taille de particule médiane de 20 à 70 µm, et
dans laquelle un rapport massique du composant B3 sur le composant B2 est de 2 à 20 ; dans laquelle la taille de particule médiane est le diamètre médian, D50, dans une distribution cumulative de taille de particule basée sur le volume telle que mesurée par diffraction et diffusion laser.

2. Composition de graisse thermoconductrice selon la revendication 1, comprenant en outre 0,1 à 2 parties en masse d'un composé d'alcoxysilane représenté par RₐSi(OR')₄₋ₐ (où R représente un groupe organique substitué ou non substitué présentant 8 à 12 atomes de carbone, R' représente un groupe alkyle présentant 1 à 4 atomes de carbone, et a représente 0 ou 1) en tant que composant C, lequel est un modificateur de viscosité.

3. Composition de graisse thermoconductrice selon la revendication 1 ou la revendication 2, dans laquelle une conductivité thermique de la composition de graisse thermoconductrice est de 2,0 W/m·K ou plus et de 8,0 W/m·K ou moins, telle que mesurée par un procédé Hot Disk conformément à l'ISO/CD 22007-2.

4. Composition de graisse thermoconductrice selon l'une quelconque des revendications 1 à 3, dans laquelle une densité relative du copolymère d'éthylène-α-oléfine est de 0,83 à 0,85.

5. Composition de graisse thermoconductrice selon l'une quelconque des revendications 1 à 4, dans laquelle une densité relative de la composition de graisse thermoconductrice est de 1,0 ou plus et de 2,4 ou moins.

6. Composition de graisse thermoconductrice selon l'une quelconque des revendications 1 à 5, dans laquelle une viscosité absolue de la composition de graisse thermoconductrice est de 1000 à 20 000 Pas, laquelle est mesurée avec un viscosimètre de type B utilisant une broche T-E à une vitesse de rotation de 5 tr/min et à une température de 23 °C.

7. Composition de graisse thermoconductrice selon l'une quelconque des revendications 1 à 6, dans laquelle l'affaissement de la composition de graisse thermoconductrice est de 5 mm ou moins, lequel est déterminé par un essai de choc thermique dans lequel 0,4 g de la composition de graisse thermoconductrice est pris en sandwich entre deux plaques et compressé jusqu'à une épaisseur de 0,5 mm, les deux plaques étant maintenues à la verticale et placées dans un appareil d'essai de choc thermique, où la composition de graisse thermoconductrice compressée est soumise à 100 cycles de choc thermique à -40 °C pendant 30 minutes et à 125 °C pendant 30 minutes.

8. Composition de graisse thermoconductrice selon l'une quelconque des revendications 1 à 7, dans laquelle le copolymère d'éthylène-α-oléfine est un copolymère d'éthylène-propylène.

9. Composition de graisse thermoconductrice selon l'une quelconque des revendications 1 à 8, dans laquelle la composition de graisse thermoconductrice est présente dans un distributeur, une bouteille, une boîte ou un tube.

10. Utilisation de la composition de graisse thermoconductrice selon l'une quelconque des revendications 1 à 8 comme matériau d'interface thermique devant être interposé entre un élément générateur de chaleur et un matériau dissipateur de chaleur de composants électriques et électroniques.
